# EUROPEAN PATENT SPECIFICATION

(11) **EP 4 434 696 B1**
(45) Date of publication and mention of the grant of the patent: **24.09.2025**
(21) Application number: 24165418.5
(22) Date of filing: 22.03.2024
(51) Int. Cl.: B26D 7/26, B26D 3/28

(54) **ADJUSTMENT STRUCTURE OF MULTI-FUNCTIONAL VEGETABLE CUTTER**
EINSTELLSTRUKTUR EINES MULTIFUNKTIONALEN GEMÜSESCHNEIDERS
STRUCTURE DE RÉGLAGE D'UN DISPOSITIF DE COUPE DE LÉGUMES MULTIFONCTIONNEL

(30) Priority: 24.03.2023 CN 202320638578 U
(43) Date of publication of application: 25.09.2024
(73) Proprietor: Lu, Congqiang, Taizhou, Zhejiang (CN)
(72) Inventor: Lu, Congqiang, Taizhou, Zhejiang (CN)
(74) Representative: Zaboliene, Reda

(56) References cited:
- EP-A1- 2 944 441
- WO-A1-2016/164273
- CN-U- 208 629 506

## Description

### TECHNICAL FIELD

The invention relates to the technical field of vegetable cutters, and relates to an adjustment structure of a multi-functional vegetable cutter.

### BACKGROUND

A vegetable cutter is a common food processing device used for cutting food. A multi-functional vegetable cutter can cut food into slices or shreds as needed to meet different requirements.

For example, China utility model patent application No. CN208629506U has disclosed a food cutter. The food cutter includes a housing and a cutting mechanism. The cutting mechanism includes a cutting portion and a pulling portion configured to control the cutting portion to move back and forth. The cutting portion includes a sliding member, a first knife, and a plurality of second knives. The sliding member is slidably connected to the housing, and in a process of the pulling portion pulling the sliding member to move back and forth, the food can be cut into slices.

Document WO 2016/164273 A1 discloses mandoline slicer designed to address issues with existing slicers, such as difficult-to-use slicing guards and limited functionality. The mandoline slicer includes an adjustable slicing blade, preferably with stepped adjustments for slicing depth. It also features retractable julienne blades and a hand guard that slides along the slicing tray. The hand guard can be pivoted into an open position for receiving food and is magnetically retained against the tray. Some versions include cubing blades, multiple slicing blades, and additional features for enhanced versatility. The slicer is designed for easy adjustment, allowing for various slicing and grating tasks. The invention aims to provide a user-friendly, multi-purpose tool that can be used regularly, unlike typical unitask slicers.

In the food cutter of the China utility model, the state of a second cutting knife can be adjusted separately using a screw pile, but an end portion of the screw pile is difficult to manually adjust and inconvenient to use. In addition, the screw pile exceeds a cutter, and its layout is not ideal either.

### SUMMARY

In view of the defects in the prior art, the invention provides an adjustment structure of a multi-functional vegetable cutter, and has advantages of a simple structure, convenient operation, and a more proper space layout.

To resolve the foregoing technical problem, an objective of the invention is achieved using the following technical solution.

An adjustment structure of a multi-functional vegetable cutter is provided, including a cutting mechanism slidably moving in a housing. The cutting mechanism includes a frame and an upper cutting plane and a lower cutting plane that are disposed in the frame, a lower end of the upper cutting plane is provided with a parallel cutting blade, and an upper end of the lower cutting plane is provided with a first vertical cutting assembly. The first vertical cutting assembly includes a first blade bracket slidably moving in the frame along a height direction and a plurality of first vertical cutting blades penetrating through the lower cutting plane, a lifting frame is slidably disposed in the frame along a length direction, the lifting frame is provided with a pair of first lifting grooves, two ends of the first blade bracket are provided with blade bracket sliders that fit with the first lifting grooves and ascend or descend along a trajectory of the first lifting grooves, the frame is rotatably provided with a knob driving the lifting frame to move, and the knob drives the lifting frame via a gear and a gear rack.

In the foregoing adjustment structure of a multi-functional vegetable cutter, a gear seat is disposed in the frame, a gear shaft is rotatably disposed in the gear seat, the gear shaft is fixed to a gear, the gear is fixed to a knob, an upper end of the lifting frame is provided with a strip-shaped groove accommodating the gear shaft, and the lifting frame is provided with a gear rack meshed with the gear.

In the foregoing adjustment structure of a multi-functional vegetable cutter, a bottom of the gear shaft is provided with a locking seat, the locking seat is provided with a plurality of locking planes, the locking planes are connected via a curved surface, a side of the gear seat is provided with a plurality of locking chutes, a locking block is slidably disposed in the locking chute, a locking spring is disposed between the locking block and the locking chute, and the locking block abuts against the locking plane. Preferably, the locking seat has four locking planes, and two locking chutes are provided and perpendicular to each other.

In the foregoing adjustment structure of a multi-functional vegetable cutter, a side wall of the frame is provided with a plurality of strip-shaped chutes, and two sides of the lifting frame are provided with strip-shaped sliders fitting with the strip-shaped chutes. Preferably, two pairs of strip-shaped chutes and two pairs of strip-shaped sliders are provided and located at different heights.

In the foregoing adjustment structure of a multi-functional vegetable cutter, the upper end of the lower cutting plane is further provided with a second vertical cutting assembly, the second vertical cutting assembly includes a second blade bracket slidably moving in the frame along the height direction and a plurality of second vertical cutting blades penetrating through the lower cutting plane, the lifting frame is provided with a pair of second lifting grooves, two ends of the second blade bracket are provided with blade bracket sliders that fit with the second lifting grooves and ascend or descend along a trajectory of the second lifting grooves, and the first vertical cutting blade and the second vertical cutting blade, as well as the first lifting groove and the second lifting groove, are vertically staggered. Further, the first blade bracket and the second blade bracket are each provided with a convex structure and a concave structure that fit with each other.

In the foregoing adjustment structure of a multi-functional vegetable cutter, the first lifting groove includes two horizontal segments and a tilted segment connecting the horizontal segments. When the blade bracket slider of the first blade bracket is located on the two horizontal segments separately, the first vertical cutting assembly is in an operating state and a retracted state separately; and the second lifting groove includes two horizontal segments and a tilted segment connecting the horizontal segments, when the blade bracket slider of the second blade bracket is located on the two horizontal segments separately, the second vertical cutting assembly is in an operating state and a retracted state separately.

In the foregoing adjustment structure of a multi-functional vegetable cutter, a lifting cavity accommodating the first blade bracket and the second blade bracket is provided in the frame, two pairs of blade bracket chutes are disposed on two sides of the lifting cavity, the first blade bracket and the second blade bracket are slidably disposed in the two pairs of blade bracket chutes, respectively, and a cover plate fixedly connected to the frame is disposed above the lifting cavity.

Compared with the prior art, the invention has the following beneficial effects.

1. The invention provides an adjustment structure of a vegetable cutter, and a lifting frame is driven, using a knob, to move up and down, so as to adjust the state of the vertical cutting assembly. The utility model has advantages of a simple structure, convenient operation, and a proper space layout.

2. The invention can be further provided with two vertical cutting assemblies, and the same knob can be used to drive the two vertical cutting assemblies to switch the use state, thus easily meeting more use requirements.

3. The invention adds a locking structure at the knob, which can prevent the knob from rotating during vegetable cutting, allowing the vertical cutting assembly to be more stable during operation. Fitting with different locking planes, the locking structure can further provide adjustment positions for the knob, to assist in adjustment of the knob, allowing for more convenient adjustment.

### BRIEF DESCRIPTION OF THE DRAWINGS

FIG. 1 is a three-dimensional diagram according to the invention.
FIG. 2 is a three-dimensional diagram of a cutting mechanism according to the invention.
FIG. 3 is another three-dimensional diagram of a cutting mechanism according to the invention.
FIG. 4 is a cross-sectional diagram of FIG. 2.
FIG. 5 is a three-dimensional diagram of a driving assembly according to the invention.
FIG. 6 is a three-dimensional diagram of a knob assembly according to invention.
FIG. 7 is a three-dimensional diagram of a blade bracket assembly according to the invention.
FIG. 8 is a three-dimensional diagram of a lifting frame according to the invention.

Numeral references in the figures: 1. housing; 2. cutting mechanism; 3. frame; 4. upper cutting plane; 5. lower cutting plane; 6. parallel cutting blade; 7. first blade bracket; 8. first vertical cutting blade; 9. lifting frame; 10. first lifting groove; 11. knob; 12. gear; 13. gear rack; 14. gear seat; 15. gear shaft; 16. strip-shaped groove; 17. locking plane; 18. curved surface; 19. locking chute; 20. locking block; 21. locking spring; 22. strip-shaped chute; 23. strip-shaped slider; 24. second blade bracket; 25. second vertical cutting blade; 26. second lifting groove; 27. cover plate.

### DETAILED DESCRIPTION OF THE EMBODIMENTS

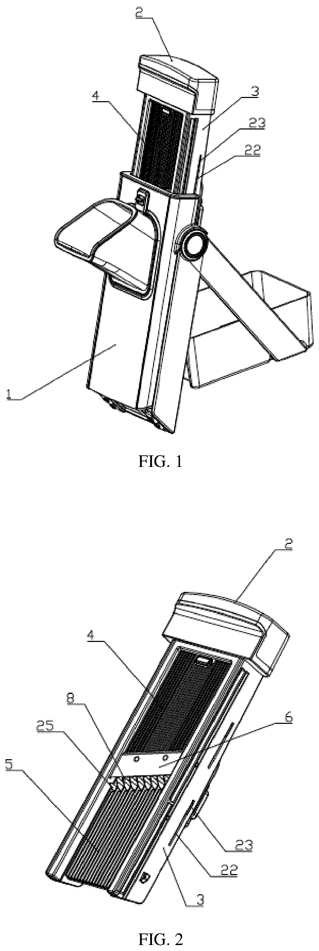

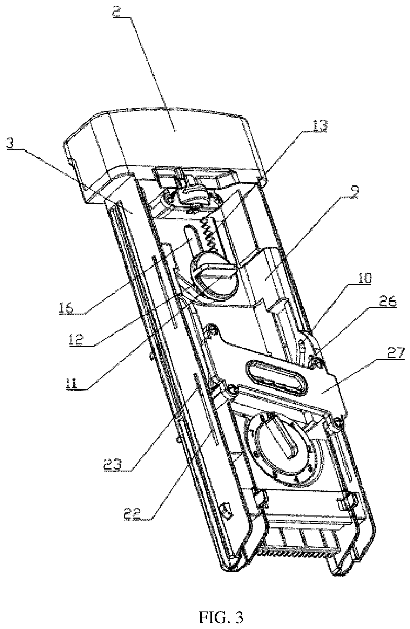

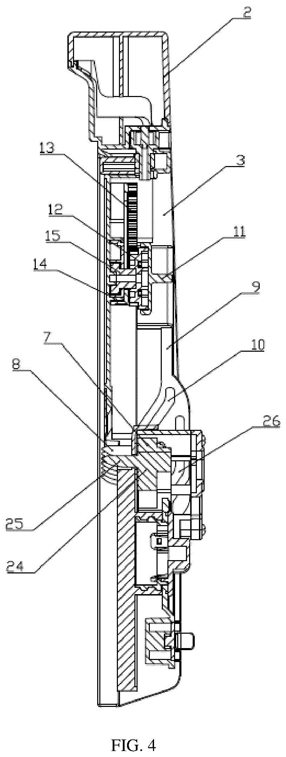

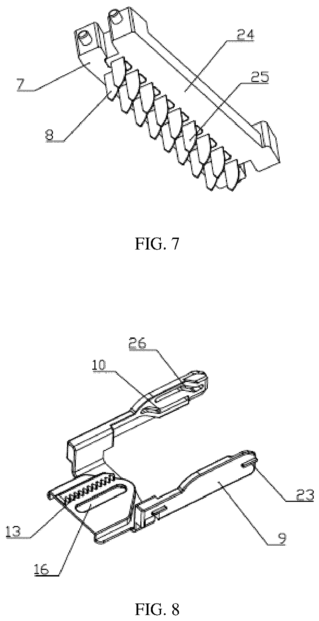

The invention is further described below with reference to the accompanying drawings and a specific embodiment. Refer to FIGs. 1 to 8.

An adjustment structure of a multi-functional vegetable cutter is provided, including a cutting mechanism 2 slidably moving in a housing 1. The cutting mechanism 2 includes a frame 3 and an upper cutting plane 4 and a lower cutting plane 5 that are disposed in the frame 3, a lower end of the upper cutting plane 4 is provided with a parallel cutting blade 6, and an upper end of the lower cutting plane 5 is provided with a first vertical cutting assembly. The first vertical cutting assembly includes a first blade bracket 7 slidably moving in the frame 3 along a height direction and a plurality of first vertical cutting blades 8 penetrating through the lower cutting plane 5, a lifting frame 9 is slidably disposed in the frame 3 along a length direction, the lifting frame 9 is provided with a pair of first lifting grooves 10, two ends of the first blade bracket 7 are provided with blade bracket sliders that fit with the first lifting grooves 10 and ascend or descend along a trajectory of the first lifting grooves 10, the frame 3 is rotatably provided with a knob 11 driving the lifting frame 9 to move, and the knob 11 drives the lifting frame 9 via a gear 12 and a gear rack 13.

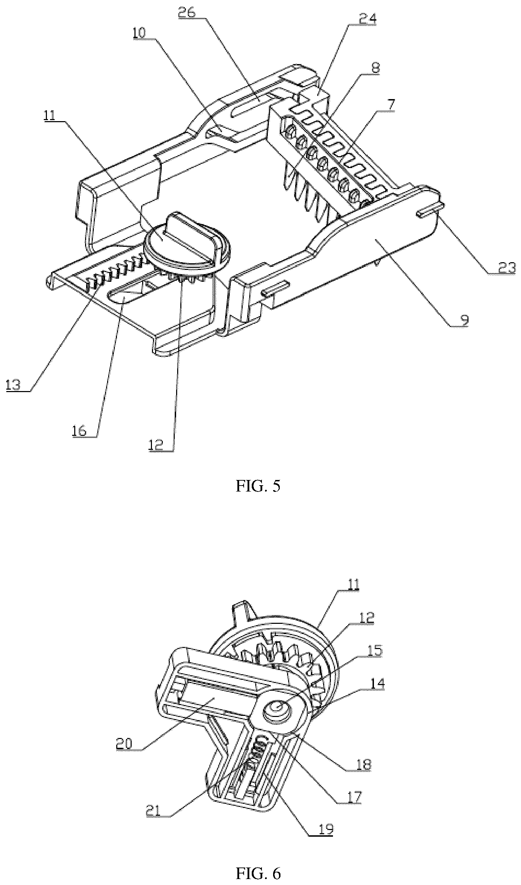

Referring to FIG. 5, a gear seat 14 is disposed in the frame 3, a gear shaft 15 is rotatably disposed in the gear seat 14, the gear shaft 15 is fixed to a gear 12, the gear 12 is fixed to a knob 11, an upper end of the lifting frame 9 is provided with a strip-shaped groove 16 accommodating the gear shaft 15, and the lifting frame 9 is provided with a gear rack 13 meshed with the gear 12.

In this embodiment, the process of the knob 11 driving the first vertical cutting assembly to ascend or descend is as follows: The knob 11 is rotated manually, and the gear 12 and the gear shaft 15 rotate along with it. The gear 12 and the gear rack 13 drive the lifting frame 9 to move vertically. When the lifting frame 9 moves vertically, the blade bracket slider moves along the trajectory of the first lifting groove 10, to change its position in the height direction, thus further driving the first blade bracket 7 and the first vertical cutting blade 8 to ascend or descend.

A side wall of the frame 3 is provided with a plurality of strip-shaped chutes 22, and two sides of the lifting frame 9 are provided with strip-shaped sliders 23 fitting with the strip-shaped chutes. Preferably, two pairs of strip-shaped chutes 22 and two pairs of strip-shaped sliders 23 are provided and located at different heights.

To meet more cutting requirements and obtain finer shreds, the upper end of the lower cutting plane 5 is further provided with a second vertical cutting assembly, the second vertical cutting assembly includes a second blade bracket 24 slidably moving in the frame 3 along the height direction and a plurality of second vertical cutting blades 25 penetrating through the lower cutting plane 5, the lifting frame 9 is provided with a pair of second lifting grooves 26, two ends of the second blade bracket 24 are provided with blade bracket sliders that fit with the second lifting grooves 26 and ascend or descend along a trajectory of the second lifting grooves 26, and the first vertical cutting blade 8 and the second vertical cutting blade 25, as well as the first lifting groove 10 and the second lifting groove 26, are vertically staggered. Further, the first blade bracket 7 and the second blade bracket 24 are each provided with a convex structure and a concave structure that fit with each other.

The first lifting groove 10 includes two horizontal segments and a tilted segment connecting the horizontal segments. When the blade bracket slider of the first blade bracket 7 is located on the two horizontal segments separately, the first vertical cutting assembly is in an operating state and a retracted state separately. The second lifting groove 26 includes two horizontal segments and a tilted segment connecting the horizontal segments, and when the blade bracket slider of the second blade bracket 24 is located on the two horizontal segments separately, the second vertical cutting assembly is in an operating state and a retracted state separately.

In the invention, the process of the knob 11 driving the two vertical cutting assemblies is as follows: In an initial state, the blade bracket slider of the first blade bracket 7 and the blade bracket slider of the second blade bracket 24 are both located on the lower horizontal segments, the first vertical cutting blade 8 and the second vertical cutting blade 25 are both in the retracted state. The lifting frame 9 is moved up, the blade bracket slider of the first blade bracket 7 moves from the lower horizontal segment onto the upper horizontal segment via the tilted segment, and the blade bracket slider of the second blade bracket 24 slides on the lower horizontal segment all the time. In this case, the first vertical cutting blade 8 extends, and the second vertical cutting blade 25 is still in the retracted state. The lifting frame 9 is moved up continuously, the blade bracket slider of the first blade bracket 7 slides on the upper horizontal segment all the time, and the blade bracket slider of the second blade bracket 24 moves onto the upper horizontal segment via the tilted segment. In this case, the first vertical cutting blade 8 and the second vertical cutting blade 25 both extend.

Referring to FIG. 6, a bottom of the gear shaft 15 is provided with a locking seat, the locking seat is provided with a plurality of locking planes 17, the locking planes 17 are connected via a curved surface 18, a side of the gear seat 14 is provided with a plurality of locking chutes 19, a locking block 20 is slidably disposed in the locking chute 19, a locking spring 21 is disposed between the locking block 20 and the locking chute 19, and the locking block 20 abuts against the locking plane 17. Preferably, the locking seat has four locking planes 17, and two locking chutes 19 are provided and perpendicular to each other. After the locking seat rotates by 90 degrees every time, the locking seat and the locking block 20 form a locking structure. Specifically, in this embodiment, after rotation by 90 degrees from the initial state, the first vertical cutting blade 8 extends, and after another rotation by 90 degrees, the second vertical cutting blade 25 extends. Then, a reverse rotation is performed by 90 degrees, the second vertical cutting blade 25 is retracted, and another reverse rotation is performed by 90 degrees, the first vertical cutting blade 8 is retracted to return to the initial state.

To enable the first blade bracket 7 and the second blade bracket 24 to stably slide along the height direction, a lifting cavity accommodating the first blade bracket 7 and the second blade bracket 24 is provided in the frame 3, two pairs of blade bracket chutes are disposed on two sides of the lifting cavity, the first blade bracket 7 and the second blade bracket 24 are slidably disposed in the two pairs of blade bracket chutes, respectively, and a cover plate 27 fixedly connected to the frame 3 is disposed above the lifting cavity.

## Claims

1. An adjustment structure for a multi-functional vegetable cutter, comprising a cutting mechanism (2) slidably movable in a housing (1), wherein the cutting mechanism (2) comprises a frame (3) having a length direction extending along its longest dimension and an upper cutting plane (4) and a lower cutting plane (5) that are disposed in the frame (3), wherein the upper cutting plane (4) is positioned above the lower cutting plane (5) and a lower region of the upper cutting plane (4) is provided with a cutting blade (6) parallel with respect to the surface of the upper cutting plane (4), and an upper region of the lower cutting plane (5) is provided with a first vertical cutting assembly, wherein the first vertical cutting assembly comprises a first blade bracket (7) slidably movable in the frame (3) along the length direction and a plurality of first vertical cutting blades (8) penetrating through the lower cutting plane (5), a lifting frame (9) is slidably disposed in the frame (3) along a length direction, the lifting frame (9) is provided with a pair of first lifting grooves (10), two ends of the first blade bracket (7) are provided with blade bracket sliders that are configured to fit with the first lifting grooves (10) and ascend or descend along a trajectory of the first lifting grooves (10) relative to the lower cutting plane (5) and wherein the first vertical cutting assembly is configured to move vertically relative to the lower cutting plane (5) along the trajectory of the first lifting grooves (10), the frame (3) is rotatably provided with a knob (11) driving the lifting frame (9) to slide relative to the frame (3), and **characterized in that** the knob (11) is configured to drive the lifting frame (9) via a gear (12) and a gear rack (13), wherein a gear seat (14) is disposed in the frame (3), a gear shaft (15) is rotatably disposed in the gear seat (14), the gear shaft (15) is fixed to the gear (12), the gear (12) is fixed to the knob (11), an upper end of the lifting frame (9) is provided with a strip-shaped groove (16) accommodating the gear shaft (15), and the lifting frame (9) is provided with the gear rack (13) meshed with the gear (12) and wherein the bottom of the gear shaft (15) is provided with a locking seat, the locking seat is provided with a plurality of locking planes (17), the locking planes (17) are connected via a curved surface (18), a side of the gear seat (14) is provided with a plurality of locking chutes (19), a locking block (20) is slidably disposed in the locking chute (19), a locking spring (21) is disposed between the locking block (20) and the locking chute (19), and the locking block (20) abuts against the locking plane (17).

2. The adjustment structure for a multi-functional vegetable cutter according to claim 1, wherein a side wall of the frame (3) is provided with a plurality of strip-shaped chutes (22), and two sides of the lifting frame (9) are provided with strip-shaped sliders (23) fitting with the strip-shaped chutes (22).

3. The adjustment structure for a multi-functional vegetable cutter according to claim 1, wherein the upper region of the lower cutting plane (5) is further provided with a second vertical cutting assembly, the second vertical cutting assembly comprises a second blade bracket (24) slidably movable in the frame (3) along the height direction and a plurality of second vertical cutting blades (25) penetrating through the lower cutting plane (5), the lifting frame (9) is provided with a pair of second lifting grooves (26), two ends of the second blade bracket (24) are provided with blade bracket sliders that are configured to fit with the second lifting grooves (26) and ascend or descend along a trajectory relative to the lower cutting plane (5) of the second lifting grooves (26) and wherein the second vertical cutting assembly is configured to move vertically relative to the lower cutting plane (5) along the trajectory of the second lifting grooves (26), and the first vertical cutting blade (8) and the second vertical cutting blade (25), as well as the first lifting groove (10) and the second lifting groove (26), are vertically staggered.

4. The adjustment structure for a multi-functional vegetable cutter according to claim 3, wherein the first lifting groove (10) comprises two horizontal segments and a tilted segment connecting the horizontal segments, wherein the titled segment is tilted relative to the lower cutting plane (5) and horizontal segments are positioned parallelly with respect to the lower cutting plane (5) and when the blade bracket slider of the first blade bracket (7) is located on the two horizontal segments separately, the first vertical cutting assembly is in an operating state and a retracted state separately; and the second lifting groove (26) comprises two horizontal segments and the tilted segment connecting the horizontal segments, and when the blade bracket slider of the second blade bracket (24) is located on the two horizontal segments separately, the second vertical cutting assembly is in an operating state and a retracted state separately.

5. The adjustment structure for a multi-functional vegetable cutter according to claim 3, wherein a lifting cavity accommodating the first blade bracket (7) and the second blade bracket (24) is provided in the frame (3), two pairs of blade bracket chutes are disposed on two sides of the lifting cavity, the first blade bracket (7) and the second blade bracket (24) are slidably disposed in the two pairs of blade bracket chutes, respectively, and a cover plate (27) fixedly connected to the frame (3) is disposed above the lifting cavity.

## Patentansprüche

1. Eine Einstellstruktur für einen multifunktionalen Gemüseschneider, umfassend einen Schneidmechanismus (2), der in einem Gehäuse (1) verschiebbar beweglich ist, wobei der Schneidmechanismus (2) einen Rahmen (3) mit einer sich entlang seiner längsten Abmessung erstreckenden Längsrichtung und eine obere Schneidebene (4) und eine untere Schneidebene (5) umfasst, die in dem Rahmen (3) angeordnet sind, wobei die obere Schneidebene (4) über der unteren Schneidebene (5) positioniert ist und ein unterer Bereich der oberen Schneidebene (4) mit einer Schneidklinge (6) versehen ist, die parallel zur Oberfläche der oberen Schneidebene (4) verläuft, und ein oberer Bereich der unteren Schneidebene (5) mit einer ersten vertikalen Schneidanordnung versehen ist, wobei die erste vertikale Schneidanordnung einen ersten Klingenhalter (7), der in dem Rahmen (3) entlang der Längsrichtung verschiebbar beweglich ist, und eine Vielzahl von ersten vertikalen Schneidklingen (8) umfasst, die die untere Schneidebene (5) durchdringen, ein Hubrahmen (9) in dem Rahmen (3) entlang einer Längsrichtung verschiebbar angeordnet ist, der Hubrahmen (9) mit einem Paar erster Hubnuten (10) versehen ist, zwei Enden des ersten Klingenhalters (7) mit Klingenhalterschiebern versehen sind, die so konfiguriert sind, dass sie in die ersten Hubnuten (10) passen und entlang einer Bewegungsbahn der ersten Hubnuten (10) relativ zur unteren Schneidebene (5) auf- oder absteigen, und wobei die erste vertikale Schneidanordnung so konfiguriert ist, dass sie sich vertikal relativ zur unteren Schneidebene (5) entlang der Bewegungsbahn der ersten Hubnuten (10) bewegt, der Rahmen (3) drehbar mit einem Knopf (11) versehen ist, der den Hubrahmen (9) antreibt, um relativ zum Rahmen (3) zu gleiten, und **dadurch gekennzeichnet, dass** der Knopf (11) so konfiguriert ist, dass er den Hubrahmen (9) über ein Zahnrad (12) und eine Zahnstange (13) antreibt, wobei ein Zahnradsitz (14) in dem Rahmen (3) angeordnet ist, eine Zahnradwelle (15) drehbar in dem Zahnradsitz (14) angeordnet ist, die Zahnradwelle (15) an dem Zahnrad (12) befestigt ist, das Zahnrad (12) an dem Knopf (11) befestigt ist, ein oberes Ende des Hubrahmens (9) mit einer streifenförmigen Nut (16) versehen ist, die die Zahnradwelle (15) aufnimmt, und der Hubrahmen (9) mit der Zahnstange (13) versehen ist, die mit dem Zahnrad (12) in Eingriff steht, und wobei
die Unterseite der Zahnradwelle (15) mit einem Verriegelungssitz versehen ist, der Verriegelungssitz mit einer Vielzahl von Verriegelungsflächen (17) versehen ist, die Verriegelungsflächen (17) über eine gekrümmte Oberfläche (18) verbunden sind, eine Seite des Zahnradsitzes (14) mit einer Vielzahl von Verriegelungsrinnen (19) versehen ist, ein Verriegelungsblock (20) verschiebbar in der Verriegelungsrinne (19) angeordnet ist, eine Verriegelungsfeder (21) zwischen dem Verriegelungsblock (20) und der Verriegelungsrinne (19) angeordnet ist, und der Verriegelungsblock (20) an der Verriegelungsfläche (17) anliegt.

2. Die Einstellstruktur für einen multifunktionalen Gemüseschneider nach Anspruch 1, wobei eine Seitenwand des Rahmens (3) mit einer Vielzahl von streifenförmigen Rinnen (22) versehen ist, und zwei Seiten des Hubrahmens (9) mit streifenförmigen Schiebern (23) versehen sind, die in die streifenförmigen Rinnen (22) passen.

3. Die Einstellstruktur für einen multifunktionalen Gemüseschneider nach Anspruch 1, wobei der obere Bereich der unteren Schneidebene (5) ferner mit einer zweiten vertikalen Schneidanordnung versehen ist, die zweite vertikale Schneidanordnung einen zweiten Klingenhalter (24), der in dem Rahmen (3) entlang der Höhenrichtung verschiebbar beweglich ist, und eine Vielzahl von zweiten vertikalen Schneidklingen (25) umfasst, die die untere Schneidebene (5) durchdringen, der Hubrahmen (9) mit einem Paar zweiter Hubnuten (26) versehen ist, zwei Enden des zweiten Klingenhalters (24) mit Klingenhalterschiebern versehen sind, die so konfiguriert sind, dass sie in die zweiten Hubnuten (26) passen und entlang einer Bewegungsbahn relativ zur unteren Schneidebene (5) der zweiten Hubnuten (26) auf- oder absteigen, und wobei die zweite vertikale Schneidanordnung so konfiguriert ist, dass sie sich vertikal relativ zur unteren Schneidebene (5) entlang der Bewegungsbahn der zweiten Hubnuten (26) bewegt, und die erste vertikale Schneidklinge (8) und die zweite vertikale Schneidklinge (25) sowie die erste Hubnut (10) und die zweite Hubnut (26) vertikal versetzt sind.

4. Die Einstellstruktur für einen multifunktionalen Gemüseschneider nach Anspruch 3, wobei die erste Hubnut (10) zwei horizontale Abschnitte und einen die horizontalen Abschnitte verbindenden geneigten Abschnitt umfasst, wobei der geneigte Abschnitt relativ zur unteren Schneidebene (5) geneigt ist und die horizontalen Abschnitte parallel zur unteren Schneidebene (5) positioniert sind, und wenn sich der Klingenhalterschieber des ersten Klingenhalters (7) auf den beiden horizontalen Abschnitten separat befindet, sich die erste vertikale Schneidanordnung separat in einem Betriebszustand und einem eingezogenen Zustand befindet; und die zweite Hubnut (26) zwei horizontale Abschnitte und den die horizontalen Abschnitte verbindenden geneigten Abschnitt umfasst, und wenn sich der Klingenhalterschieber des zweiten Klingenhalters (24) auf den beiden horizontalen Abschnitten separat befindet, sich die zweite vertikale Schneidanordnung separat in einem Betriebszustand und einem eingezogenen Zustand befindet.

5. Die Einstellstruktur für einen multifunktionalen Gemüseschneider nach Anspruch 3, wobei ein Hubhohlraum, der den ersten Klingenhalter (7) und den zweiten Klingenhalter (24) aufnimmt, in dem Rahmen (3) vorgesehen ist, zwei Paare von Klingenhalterrinnen an zwei Seiten des Hubhohlraums angeordnet sind, der erste Klingenhalter (7) und der zweite Klingenhalter (24) jeweils verschiebbar in den beiden Paaren von Klingenhalterrinnen angeordnet sind, und eine Abdeckplatte (27), die fest mit dem Rahmen (3) verbunden ist, über dem Hubhohlraum angeordnet ist.

## Revendications

1. Une structure de réglage pour un dispositif de coupe de légumes multifonctionnel, comprenant un mécanisme de coupe (2) mobile de manière coulissante dans un boîtier (1), dans laquelle le mécanisme de coupe (2) comprend un châssis (3) ayant une direction de la longueur s'étendant le long de sa plus grande dimension et un plan de coupe supérieur (4) et un plan de coupe inférieur (5) qui sont disposés dans le châssis (3), dans laquelle le plan de coupe supérieur (4) est positionné au-dessus du plan de coupe inférieur (5) et une région inférieure du plan de coupe supérieur (4) est pourvue d'une lame de coupe (6) parallèle par rapport à la surface du plan de coupe supérieur (4), et une région supérieure du plan de coupe inférieur (5) est pourvue d'un premier ensemble de coupe vertical, dans laquelle le premier ensemble de coupe vertical comprend un premier support de lame (7) mobile de manière coulissante dans le châssis (3) le long de la direction de la longueur et une pluralité de premières lames de coupe verticales (8) pénétrant à travers le plan de coupe inférieur (5), un cadre de levage (9) est disposé de manière coulissante dans le châssis (3) le long d'une direction de la longueur, le cadre de levage (9) est pourvu d'une paire de premières rainures de levage (10), deux extrémités du premier support de lame (7) sont pourvues de coulisseaux de support de lame qui sont configurés pour s'ajuster aux premières rainures de levage (10) et monter ou descendre le long d'une trajectoire des premières rainures de levage (10) par rapport au plan de coupe inférieur (5) et dans laquelle le premier ensemble de coupe vertical est configuré pour se déplacer verticalement par rapport au plan de coupe inférieur (5) le long de la trajectoire des premières rainures de levage (10), le châssis (3) est pourvu de manière rotative d'un bouton (11) entraînant le cadre de levage (9) à coulisser par rapport au châssis (3), et **caractérisée en ce que** le bouton (11) est configuré pour entraîner le cadre de levage (9) via un engrenage (12) et une crémaillère (13), dans laquelle un siège d'engrenage (14) est disposé dans le châssis (3), un arbre d'engrenage (15) est disposé de manière rotative dans le siège d'engrenage (14), l'arbre d'engrenage (15) est fixé à l'engrenage (12), l'engrenage (12) est fixé au bouton (11), une extrémité supérieure du cadre de levage (9) est pourvue d'une rainure en forme de bande (16) recevant l'arbre d'engrenage (15), et le cadre de levage (9) est pourvu de la crémaillère (13) engrenée avec l'engrenage (12) et dans laquelle
le bas de l'arbre d'engrenage (15) est pourvu d'un siège de verrouillage, le siège de verrouillage est pourvu d'une pluralité de plans de verrouillage (17), les plans de verrouillage (17) sont reliés via une surface incurvée (18), un côté du siège d'engrenage (14) est pourvu d'une pluralité de goulottes de verrouillage (19), un bloc de verrouillage (20) est disposé de manière coulissante dans la goulotte de verrouillage (19), un ressort de verrouillage (21) est disposé entre le bloc de verrouillage (20) et la goulotte de verrouillage (19), et le bloc de verrouillage (20) vient en butée contre le plan de verrouillage (17).

2. La structure de réglage pour un dispositif de coupe de légumes multifonctionnel selon la revendication 1, dans laquelle une paroi latérale du châssis (3) est pourvue d'une pluralité de goulottes en forme de bande (22), et deux côtés du cadre de levage (9) sont pourvus de coulisseaux en forme de bande (23) s'ajustant aux goulottes en forme de bande (22).

3. La structure de réglage pour un dispositif de coupe de légumes multifonctionnel selon la revendication 1, dans laquelle la région supérieure du plan de coupe inférieur (5) est en outre pourvue d'un second ensemble de coupe vertical, le second ensemble de coupe vertical comprend un second support de lame (24) mobile de manière coulissante dans le châssis (3) le long de la direction de la hauteur et une pluralité de secondes lames de coupe verticales (25) pénétrant à travers le plan de coupe inférieur (5), le cadre de levage (9) est pourvu d'une paire de secondes rainures de levage (26), deux extrémités du second support de lame (24) sont pourvues de coulisseaux de support de lame qui sont configurés pour s'ajuster aux secondes rainures de levage (26) et monter ou descendre le long d'une trajectoire par rapport au plan de coupe inférieur (5) des secondes rainures de levage (26) et dans laquelle le second ensemble de coupe vertical est configuré pour se déplacer verticalement par rapport au plan de coupe inférieur (5) le long de la trajectoire des secondes rainures de levage (26), et la première lame de coupe verticale (8) et la seconde lame de coupe verticale (25), ainsi que la première rainure de levage (10) et la seconde rainure de levage (26), sont décalées verticalement.

4. La structure de réglage pour un dispositif de coupe de légumes multifonctionnel selon la revendication 3, dans laquelle la première rainure de levage (10) comprend deux segments horizontaux et un segment incliné reliant les segments horizontaux, dans laquelle le segment incliné est incliné par rapport au plan de coupe inférieur (5) et les segments horizontaux sont positionnés parallèlement par rapport au plan de coupe inférieur (5) et lorsque le coulisseau de support de lame du premier support de lame (7) est situé sur les deux segments horizontaux séparément, le premier ensemble de coupe vertical est dans un état de fonctionnement et un état rétracté séparément; et la seconde rainure de levage (26) comprend deux segments horizontaux et le segment incliné reliant les segments horizontaux, et lorsque le coulisseau de support de lame du second support de lame (24) est situé sur les deux segments horizontaux séparément, le second ensemble de coupe vertical est dans un état de fonctionnement et un état rétracté séparément.

5. La structure de réglage pour un dispositif de coupe de légumes multifonctionnel selon la revendication 3, dans laquelle une cavité de levage recevant le premier support de lame (7) et le second support de lame (24) est prévue dans le châssis (3), deux paires de goulottes de support de lame sont disposées sur deux côtés de la cavité de levage, le premier support de lame (7) et le second support de lame (24) sont disposés de manière coulissante dans les deux paires de goulottes de support de lame, respectivement, et une plaque de recouvrement (27) reliée de manière fixe au châssis (3) est disposée au-dessus de la cavité de levage.
